(19) Europäisches Patentamt
European Patent Office
Office européen des brevets

(11) **EP 1 595 903 B1**

(12) **EUROPEAN PATENT SPECIFICATION**

(45) Date of publication and mention
of the grant of the patent:
**21.04.2010 Bulletin 2010/16**

(51) Int Cl.:
**C08G 18/12** (2006.01)     **C08G 18/48** (2006.01)
**C08G 18/66** (2006.01)     **D06N 3/14** (2006.01)

(21) Application number: **05252746.2**

(22) Date of filing: **04.05.2005**

(54) **Heat resistant aqueous polyurethane resin composition for artificial or synthetic leather, method or producing the same and leather-like sheet**

Hitzebeständige wässrige Polyurethanharzzusammensetzung für künstliches oder synthetisches Leder, Verfahren zur Herstellung desselben und lederartige Folie

Composition de résine de polyuréthane aqueuse résistante à la chaleur pour cuir artificiel ou synthétique, procédé de sa préparation et feuille de type cuir (similaire au cuir)

(84) Designated Contracting States:
**IT**

(30) Priority: **14.05.2004 JP 2004144621**

(43) Date of publication of application:
**16.11.2005 Bulletin 2005/46**

(73) Proprietor: **Dai-Ichi Kogyo Seiyaku Co., Ltd.
Kyoto-shi,
Kyoto 600-8873 (JP)**

(72) Inventors:
• **Kobayashi, Katsuyoshi
Otokuni-gun,
Kyoto 618-0071 (JP)**
• **Kagimasa, Toshio
Kameoka-shi,
Kyoto 612-0846 (JP)**
• **Miyamura, Takeshi
Kameoka-shi,
Kyoto 621-0847 (JP)**

(74) Representative: **Jacob, Reuben Ellis et al
R.G.C. Jenkins & Co
26 Caxton Street
London
SW1H 0RJ (GB)**

(56) References cited:
**US-A1- 2003 194 556**

• **DATABASE WPI Section Ch, Week 199243
Derwent Publications Ltd., London, GB; Class
A25, AN 1992-354798 XP002341401 & JP 04
258642 A (KURARAY CO LTD) 14 September 1992
(1992-09-14)**
• **DATABASE WPI Section Ch, Week 200113
Derwent Publications Ltd., London, GB; Class
A25, AN 2001-114866 XP002341402 & JP 2000
265052 A (KURARAY CO LTD) 26 September 2000
(2000-09-26)**

**Description**

The present invention relates to a heat resistant aqueous polyurethane resin composition for artificial or synthetic leather, a method of producing the same and a leather-like sheet. More particularly, the present invention relates to a heat resistant aqueous polyurethane resin composition for artificial or synthetic leather, a method of producing the same and a leather-like sheet that does not cause desorption of a polyurethane resin in a dyeing treatment when used in a process of artificial or synthetic leather.

In a manufacturing process of suede-like artificial leather, untreated white cloth is often processed with resins, and then provided into a dyeing process. In a dyeing process, owing to the processing with high temperature and high pressure water, a phenomenon that resin deposited by the processing with resin desorbs from the processed cloth in a dyeing vessel is observed. It is known to cause problems that the desorbed resin (1) deposits onto and contaminates the interior of the dyeing vessel, and (2) re-adheres to the cloth to be processed to cause defective piece goods.

To solve such problems, various investigations are made in the past. As an example, it is known that the heat resistance may be improved and desorption of the resin may be suppressed in some degree by adding and mixing a low molecular weight hindered amine light stabilizer (HALS) to the resin used in the processing to enhance the heat resistance (see e.g. Japanese Patent No. 3166072). In case where desired effect is not obtained by adding the low molecular weight hindered amine light stabilizer, high molecular weight hindered amine light stabilizers are used.

However, although certain degree of effect is obtained by adding high molecular weight hindered amine light stabilizers, effect expected based on the added amount of the stabilizers is not obtained because the hindered amine light stabilizers are partially solved out from the resin.

Further, although it is investigated to introduce the hindered amine light stabilizer into a molecular skeleton of the resin in order to improve light fastness (see e.g. Japanese laid open patent publication No. 2000-265052), distinction of effect is observed depending upon a type of the light stabilizer used for introducing and available type of the light stabilizer is limited because it is essential to form an ester bond for introducing the stabilizer. In addition, the light stabilizer is easily eliminated because the ester bond is easily hydrolyzed, which resulting in a problem that it cannot stand up to processing with hot water in a dyeing process. Moreover, even if it stands up to processing with hot water, the durability of the resin still remains low because the problem that the hydrolysis occurs with ease is not dissolved.

US 2003/0194556 describes binder compositions containing an aqueous polyurethane-polyurea dispersion and an amine stabiliser. The compositions are protected from thermal yellowing by specific combinations of hydrazides and sterically hindered amines.

The present invention attained to solve the problems of prior art and the objective of the present invention is to provide a heat resistant aqueous polyurethane resin composition for artificial or synthetic leather, a method of producing the same and a leather-like sheet, which improve heat resistance of urethane resin to prevent from desorbing the stabilizer in the dyeing process and enable to substantially suppress vessel contamination and the frequency of occurrence of defective piece goods by introducing hindered amine stabilizers into polyurethane resin.

The present invent ion prevents from solving out of the stabilizer in the dyeing process and allows to have original heat resistance of the hindered amine stabilizers by introducing the hindered amine stabilizers into a molecular skeleton of polyurethane resin, so that the desorption of the urethane resin is prevented.

The heat resistant aqueous polyurethane resin composition for artificial or synthetic leather of the present invention comprises a polyurethane resin obtained by introducing a hindered amine stabilizer into the molecular skeleton of the polyurethane resin by adding a compound having free isocyanate groups to a urethane prepolymer having isocyanate groups, emulsifying and elongating the molecular chain of the urethane prepolymer. The compound having free isocyanate groups is obtained by a reaction of a hindered amine stabilizer having imino groups and a polyisocyanate compound.

The method of producing a heat resistant aqueous polyurethane resin composition for artificial or synthetic leather of the present invention comprises reacting a hindered amine stabilizer having imino groups andapolyisocyanate compound to obtain a compound having free isocyanate groups, adding the compound having free isocyanate groups to a polyurethane prepolymer having isocyanate groups, and emulsifying the polyurethane prepolymer haying isocyanate groups and elongating the molecular chain of the polyurethane prepolymer having isocyanate groups to obtain a polyurethane resin which is introduced the hindered amine stabilizer into the molecular skeleton of the polyurethane resin.

Using the heat resistant aqueous polyurethane resin composition for artificial or synthetic leather according to the present invention, the heat resistance of the polyurethane resin is improved and prevented the desorption of the stabilizer by hot water processing in the dyeing process because the solving out of the hindered amine stabilizer is prevented. Therefore, the vessel contamination by the desorbed resin and the re-adheres to the cloth to be processed is substantially suppressed.

According to the method of producing a heat resistant aqueous polyurethane resin composition for artificial or synthetic leather of the present invention, because the hindered amine stabilizer is introduced into the molecular skeleton of the polyurethane, the heat resistance of the polyurethane resin is highly improved.

Because heat resistance is improved by using an aqueous polyurethane resin compositions of the present invention, the compositions are utilized for artificial leather or synthetic leather. The hindered amine stabilizers having imino groups used in the present invention are (1) poly[{6-(1, 1, 3, 3-tetramethyl butyl) amino-1, 3, 5- triazine 2, 4-diyl} {(2, 2, 6, 6- tetramethyl-4-piperidyl)imino} hexamethylene {(2, 2, 6, 6-tetramethyl-4-piperidyl)amino}], or (2) N, N, N, N-tetrakis-(4, 6-bis-(butyl-(N-methyl-2, 2, 6, 6- tetramethylpiperidine-4-yl) amino-triazine-2-yl)-4, 7-diazadecane-1, 10-diamine.

The amount of the hindered amine stabilizer having imino groups is determined such that the amount falls within the range of 0.1 - 5.0 % by weight based on the solid resin content of the heat resistant aqueous polyurethane resin composition for artificial or synthetic leather finally obtained. If the amount is less than 0.1 % by weight, heat resistance of the polyurethane may not be greatly improved, while if the amount is more than 5.0 % by weight, strength of the film is lowered which may cause desorption of the resin, which is undesirable.

The hindered amine stabilizers having imino groups in the present invention can be incorporated into a molecular skeleton of a urethane resin by reacting with a polyisocyanate. For example, the hindered amine stabilizers having imino groups can be incorporated into a urethane resin molecular skeleton by adding the hindered amine stabilizer before urethane prepolymerizing reaction of a polyisocyanate and an organic compound having active hydrogen, and emulsifying the resultant urethane prepolymer and elongating the chain of the urethane prepolymer. The hindered amine stabilizers having imino groups can be also incorporated into a molecular skeleton of a urethane resin by reacting with a urethane prepolymer obtained by reacting a polyisocyanate and an organic compound having active hydrogen, then emulsifying and elongating the chain of the urethane prepolymer. Further, the hindered amine stabilizers having imino groups can be also incorporated into a molecular skeleton of a urethane resin by reacting with a polyisocyanate to obtain a compound having free isocyanate groups in advance, then conducting urethane prepolymerizing reaction using the compound having free isocyanate groups, emulsifying and elongating the chain of the urethane prepolymer.

Examples of the compounds having isocyanate groups include polyisocyanate compounds and urethane prepolymers. Various polyisocyanates used in the field of the urethane industry can be used as the compound having isocyanate groups. Examples of the compound having isocyanate groups include various type of aromatic, aliphatic and alicyclic isocyanates and mixtures thereof, such as naphthalene diisocyanate, isophorone diisocyanate, xylylene diisocyanate, hexamethylene diisocyanate, hydrogenated diphenylmethane diisocyanate, diphenylmethane diisocyanate, tolylene diisocyanate, norbornane diisocyanate, polymethylene polyphenyl polyisocyanate, biuret type hexamethylene diisocyanate, isocyanurate type hexamethylene diisocyanate, and mixtures thereof.

Examples of the urethane prepolymers include various prepolymers obtained by using the above-described polyisocyanates and compounds having active hydrogen.

Examples of the compounds having active hydrogen for reacting with polyisocyanates include polyols such as ethylene glycol, diethylene glycol, butanediol, propylene glycol trimethylolpropane, glycerin, pentaerythritol, and oxyalkylene derivatives thereof. In addition, components of aromatic ring or alicyclic ring can be used such as bisphenol A, bisphenol B, hydrogenated bisphenol A, dibromobisphenol A, cyclohexanediol, cyclohexanedimethanol, hydroquinone, hydroquinone dihydroxyethyl ether, bis(2-hydroxyethyl)terephthalate, bis(4-hydroxyphenyl) sulfone, etc.

Antioxidants or heat stabilizers other than the hindered amine stabilizers having imino groups may be concurrently used such as hindered phenols, phosphorus compounds, lactones, sulfur compounds. Moreover, benzoate stabilizers or hindered amine stabilizers that have not imino groups can be concurrently used. Further, in the present invention, antiseptics or antifungal agents may be also added.

Examples

Next, the present invention is explained by way of Examples , however, these should not be construed as limiting the scope of the present invention. It should be noted that "%" and "parts" used in the following Examples mean % by weight and parts by weight, respectively.

< Synthetic Example 1 ... Synthesis of Urethane Prepolymer A >

To a mixture of 180 parts of poly-tetrametylene glycol (average molecular weight 1000, hydroxyl value 112, PTMG 1000 (manufactured by Asahi Kasei Corporation)), 20 parts of polyoxyethylenepropylene random copolymerized glycol (average molecular weight 3400, content of oxyethylene chain 80 % by weight), 3.8 parts of 1, 4-butanediol, 3.8 parts of trimethylolpropane and 143.8 parts of methyl ethyl ketone, 79.9 parts of dicyclohexylmethane diisocyanate was added. Then, reaction was carried out at 75°C for 90 minutes. As a result, a methyl ethyl ketone solution of urethane prepolymer was obtained whose content of free isocyanate group was 1.03% (Urethane Prepolymer A).

< Synthetic Example 2 ... Synthesis of Urethane Prepolymer B >

To a mixture of 198 parts of polypropylene glycol (average molecular weight 1100, hydroxyl value 102, POLYHARDENER D-100 (manufactured by Dai-Ichi KogyouSeiyaku Co., LTD)), 20 parts of polyoxyethylenepropylene random copolymerized glycol (average molecular weight 3400, content of oxyethylene chain 80 % by weight), 3.8 parts of 1, 4-butanediol, 3.8 parts of trimethylolpropane and 143.8 parts of methyl ethyl ketone, 76.2 parts of diphenylmethane diisocyanate was added. Then, reaction was carried out at 75°C for 90 minutes. As a result, a methyl ethyl ketone solution of urethane prepolymer was obtained whose content of free isocyanate group was 1.03% (Urethane Prepolymer B).

(Example 1)

To the above described Urethane Prepolymer A, 58 parts of 5 % methyl ethyl ketone solution of poly [{6-(1, 1, 3, 3-tetramethyl butyl) amino-1, 3, 5- triazine 2, 4-diyl}{(2, 2, 6, 6-tetramethyl-4-piperidyl)imino} hexamethylene {(2, 2, 6, 6-tetramethyl-4-piperidyl)irnino}] and 1.07 parts of isophorone diisocyanate were added and stirred for 5 minutes toprepare a solution. This solution was then added to the above synthesized Urethane Prepolymer A and stirred. 29 parts of 5% methyl ethyl ketone solution of 1, 6-hexamethylenebis(N, N-dimetylsemicarbazide) as semicarbazide antioxidant was added and stirred for 5 minutes. Then, 14.4 parts of a polyoxyethylenearylphenol ether type of nonionic surface-active agent (HLB=15), which is an ethylene oxide adduct of distyrenated phenol, was added to the solution and stirred, followed by 454.7 parts of water and emulsified and dispersed. Next, 42.4 parts of 5% aqueous solution of ethylenediamine was added and stirred for 60 minutes. Then, methyl ethyl ketone was evaporated by an evaporator at 40 - 50°C under reduced pressure to obtain an opal aqueous polyurethane resin composition 2 for artificial or synthetic leather containing urethane resin emulsion which has a mean particle size of 1.1 micron and solid content of 40%.

(Evaluation of the heat resistant aqueous polyurethane resin compositions for artificial or synthetic leather)

Aqueous solutions were prepared by adding 70% of water to 30% of the respective Urethane emulsions of Examples and Comparative Examples. Superfine raising cloths of polyester (base cloths) were impregnated with the respective aqueous solutions and wrung with a mangle (at wet pick up of 90%owf (on weight fiber)), then thermally treated at 130°C to obtain resin-impregnated cloths. These cloths were dyed with dispersed dye using high-temperature and high-pressure jet dyeing machine (Mini Jet MJ-P300S, manufactured by Kabushikigaisya Tekusamu Giken). Dyeing was carried out under the condition of acetic acid 1g/liter, dispersed dye 0.5% owf and mixture of fatty acid ester of polyethylene glycol and sodium sulfonate of polyalkyleneoxide adduct of dialkyl phenol (COLOURSOL CE-91, manufactured by Dai-Ichi KogyouSeiyaku Co., LTD) 1g/liter, treating at 130°C for 30 minutes. After completion of dyeing process, reduction cleaning was carried out under the condition of hydrosulfite 2g/liter, soda ash 2g/liter, polyalkyleneoxide adduct of dialkyl phenol (TRIPOL TK, manufactured by Dai-Ichi KogyouSeiyaku Co., LTD) lg/liter, treatingat 80°C for 20 minutes, followed by drying to obtain dyeing treated cloths. Estimation of filmheat resistance and tendency of desorbing of resin using the dyed cloths as follows, the results of which are shown in Table 1.

<Heat-resistance of films>

(Preparation of film samples)

Each of the polyurethane resin compositions was applied on a PET film such that the thickness of dry film became 200 micron, then dried at 25°C for 24 hours. Further, these PET films were dried 130°C for 30 minutes.

(Method of evaluation)

The film samples prepared in the above were immersed in an aqueous acetic acid solution (1g/liter) of 60°C. Then the temperature is increased using high-pressure dyeing machine (Mini Color, manufactured by Kabushikigaisya Tekusamu Giken) to 130°C and maintained at this temperature for 15 minutes. Next, the films were cooled and washed with hot water for 5 minutes. The films then immersed in an aqueous NaOH and thiourea dioxide solution (each 2g/liter) of 60°C, followed by increasing the temperature to 80°C and continuously heated at this temperature for 15 minutes. Next, The films were cooled and washed with hot water and dried at room temperature. After the films were heated at 170°C for 10 hours, evaluation was carried out by determining whether tackiness was observed on the surface of the films. The results are listed in Table 1.

<Desorption of resin>

The ratio of desorbed resin was determined based on the change of weight of base cloth, resin-impregnated cloth and dye-treated cloth. The ratio of desorbed resin (%) was, as shown in formula 3, determined based on difference between (A) and (B) which were calculated from formulae 1 and 2, respectively. The results are shown in Table 1.

(Formula 1)

$$(A) = \frac{\text{Weight of base cloth after resin treatment} - \text{Weight of base cloth after dyeing treatment of resin impregnated cloth}}{\text{Weight of base cloth after resin treatment}} \times 100 \ (\%)$$

(Formula 2)

$$(B) = \frac{\text{Weight of base cloth without resin treatment} - \text{Weight of base cloth after dyeing treatment of non resin-impregnated cloth}}{\text{Weight of base cloth without resin treatment}} \times 100 \ (\%)$$

(Formula 3)

$$\text{The ratio of desorbed resin (\%)} = (A) - (B)$$

As seen from Table 1, it is understood that the films prepared using the compositions of respective Examples have excellent heat resistance, whereas the films prepared using the compositions of respective Comparative Examples have low heat resistance because of high tackiness or melting of the films. It is also understood that the films using the compositions of respective Examples have low ratio of eliminated resin, whereas the films using the compositions of respective Comparative Examples have low heat resistance because of high ratio of eliminated resin.

Table 1

|  | Example 1 |
|---|---|
| Method of adding the hindered amine stabilizer | Added as methyl ethyl ketone solution with isophorone to the prepolymer |
| Heat-resistance of the film 170°C × 10 hours | good (No tackiness) |
| Ratio of desorbed resin (%) | 3. 2 |

**Claims**

1. A heat resistant aqueous polyurethane resin composition for artificial or synthetic leather comprising a polyurethane resin obtained by introducing a hindered amine stabilizer into the molecular skeleton of the polyurethane resin by adding a compound having free isocyanate groups to a polyurethane prepolymer having isocyanate groups, emulsifying and elongating the molecular chain of the polyurethane prepolymer, wherein the compound having free isocyanate groups is obtained by a reaction of a hindered amine stabilizer having imino groups and a polyisocyanate compound,

wherein the hindered amine stabilizer having imino groups is reacted such that the content of the stabilizer falls within the range of 0.1 to 5.0 % by weight based on the solid content of the aqueous polyurethane resin composition, and

the hindered amine stabilizer having imino groups is poly[{6-(1 1, 3, 3-tetramethyl butyl) amino-1, 3, 5-triazine 2,4-diyl} {(2, 2, 6, 6-tetramethyl-4-piperidyl)imino} hexamethylene {(2, 2, 6, 6-tetramethyl-4-piperidyl)imino }] or N, N, N, N-tetraikis-(4, 6-bis-(butyl-(N-methyl-2, 2 ,6, 6-tetramethylpiperidine-4-yl) amino-triazine-2-yl)-4, 7-diazadecane-1, 10-diamine.

2. A method of producing a heat resistant aqueous polyurethane resin composition for artificial or synthetic leather into which the hindered amine stabilizer is introduced, comprising:

reacting a hindered amine stabilizer having imino groups and a polyisocyanate compound to obtain a compound having free isocyanate groups,

adding the compound having free isocyanate groups to a polyurethane prepolymer having isocyanate groups, and

emulsifying the polyurethane prepolymer having isocyanate groups and elongating the molecular chain of the polyurethane prepolymer having isocyanate groups to obtain a polyurethane resin is which the hindered amine stabilizer is introduced into the molecular skeleton of the polyurethane resin,

wherein the hindered amine stabilizer having imino groups is reacted such that the content of the stabilizer falls within the range of 0.1 to 5.0 % by weight based on the solid content of the aqueous polyurethane resin composition, and

the hindered amine stabilizer having imino groups is poly[[6-(1,1, 3, 3-tetramethyl butyl) amino-1, 3, 5-triazine 2, 4-diyl} {(2, 2, 6, 6-tetramethyl-4-piperidyl)imino} hexamethylene {(2, 2, 6, 6-tetramethyl-4-piperidyl)imino }] or N, N, N, N-tetrakis-(4, 6-bis-(butyl-(N-methyl-2, 2 ,6, 6-tetramethylpiperidine-4-yl) amino-triazine-2-yl)-4, 7-diazadecane-1, 10-diamine.

3. A leather-like sheet obtained by impregnating a fabric base material with the heat resistant aqueous polyurethane resin composition according to claim 1.

## Patentansprüche

1. Hitzebeständige wässrige Polyurethanharzzusammensetzung für künstliches oder synthetisches Leder, umfassend ein Polyurethanharz, das erhalten wird, indem ein beeinträchtigter Aminstabilisator in die Molekularstruktur des Polyurethanharzes durch Hinzufügen einer Verbindung mit freien Isocyanatgruppen zu einem Polyurethanvorpolymerisat mit Isocyanatgruppen eingeführt wird, wobei die Molekülkette des Polyurethanvorpolymerisats emulgiert und verlängert wird, wobei die Verbindung mit freien Isocyanatgruppen durch eine Reaktion eines beeinträchtigten Aminstabilisators mit Iminogruppen und einer Polyisocyanatverbindung erhalten wird, wobei der beeinträchtigte Aminstabilisator mit Iminogruppen so reagiert wird, dass der Inhalt des Stabilisators in dem Bereich von 0,1 bis 5,0 Gew.-% liegt, basierend auf dem Festgehalt der wässrigen Polyurethanharzzusammensetzung, und der beeinträchtigte Aminstabilisator mit Iminogruppen Poly[ {6-(1, 1, 3, 3-Tetramethylbutyl) Amino-1, 3, 5-Triazin 2, 4-Diyl)} {(2, 2, 6, 6-Tetramethyl-4-Piperidyl)-Imino} Hexamethylen {(2, 2, 6, 6-Tetramethyl-4-Piperidyl)-Imino }] oder N, N, N, N-Tetrakis-(4, 6-bis-(Butyl-(N-Methyl-2, 2, 6, 6-Tetramethylpiperidin-4-yl) Amino-Triazin-2-yl)-4, 7-Diazadecan-1, 10-Diamin ist.

2. Verfahren zur Herstellung einer hitzebeständigen wässrigen Polyurethanharzzusammensetzung für künstliches oder synthetisches Leder, in die der beeinträchtigte Aminstabilisator eingeführt wird, umfassend:

Reagieren eines beeinträchtigten Aminstabilisators mit Iminogruppen und einer Polyisocyanatverbindung, um eine Verbindung mit freien Isocyanatgruppen zu erhalten,

Hinzufügen der Verbindung mit freien Isocyanatgruppen zu einem Polyurethanvorpolymerisat mit Isocyanatgruppen, und

Emulgieren des Polyurethanvorpolymerisats mit Isocyanatgruppen und Verlängern der Molekülkette des Polyurethanvorpolymeriats mit Isocyanatgruppen, um ein Polyurethanharz zu erhalten, in das der beeinträchtigte Aminstabilisator in die Molekularstruktur des Polyurethanharzes eingefügt wird, wobei der beeinträchtigte Aminstabilisator mit Iminogruppen so reagiert wird, dass der Inhalt des Stabilisators im Bereich von 0,1 bis 5,0 Gew.-% liegt, basierend auf dem Festgehalt der wässrigen Polyurethanharzzusammensetzung, und der beeinträchtigte Aminstabilisator mit Iminogruppen Poly[ {6-(1, 1, 3, 3- Tetramethylbutyl) Amino-1, 3, 5-Triazin 2, 4-Diy1)} {(2, 2, 6, 6-Tetramethyl-4-Piperidyl)-Imino} Hexamethylen {(2, 2, 6, 6-Tetramethyl-4-Piperidyl)-Imino }] oder N, N, N, N-Tetrakis-(4, 6-bis-(Butyl-(N-Methyl-2, 2, 6, 6-Tetramethylpiperidin-4-yl) Amino-Triazin-2-yl)-4, 7-Diazadecan-1, 10-Diamin ist.

**3.** Lederartige Folie, die durch Imprägnieren eines Materials auf Faserbasis mit der hitzebeständigen wässrigen Polyurethanharzzusammensetzung nach Anspruch 1 erhalten wurde.

## Revendications

**1.** Composition aqueuse thermorésistante de résine de polyuréthane pour cuir artificiel ou synthétique, comprenant une résine de polyuréthane qu'on a obtenue en introduisant un stabilisant de type amine encombrée dans le squelette moléculaire de la résine de polyuréthane, par addition d'un composé porteur de groupes isocyanate libres à un prépolymère polyuréthane à groupes isocyanate, émulsification du prépolymère polyuréthane et allongement de sa chaîne moléculaire, ledit composé porteur de groupes isocyanate libres ayant été obtenu par réaction d'un stabilisant de type amine encombrée doté de groupes imino et d'un polyisocyanate, lequel stabilisant de type amine encombrée doté de groupes imino a été mis à réagir de telle sorte que la quantité de stabilisant contenue représente de 0,1 à 5,0 % du poids des matières solides contenues dans la composition aqueuse de résine de polyuréthane, et lequel stabilisant de type amine encombrée doté de groupes imino est du poly[{6-(1,1,3,3-tétraméthyl-butyl)amino-1,3,5-triazine-2,4-diyl}-{(2,2,6,6-tétraméthyl-pipéridin-4-yl)-imino}-hexaméthylène-{(2,2,6,6-tétraméthyl-pipéridin-4-yl)-imino}] ou de la N,N,N,N-tétrakis-[4,6-bis-{butyl-(N-méthyl-2,2,6,6-tétraméthyl-pipéridine-4-yl)amino}triazine-2-yl]-4,7-diaza-décane-1,10-diamine.

**2.** Procédé de production d'une composition aqueuse thermorésistante de résine de polyuréthane pour cuir artificiel ou synthétique, dans laquelle est introduit un stabilisant de type amine encombrée, lequel procédé comprend les étapes suivantes :

- faire réagir un stabilisant de type amine encombrée doté de groupes imino et un polyisocyanate, de manière à obtenir un composé porteur de groupes isocyanate libres ;
- ajouter ce composé porteur de groupes isocyanate libres à un prépolymère polyuréthane à groupes isocyanate,
- et émulsifier ce prépolymère polyuréthane à groupes isocyanate et allonger la chaîne moléculaire de ce prépolymère polyuréthane à groupes isocyanate, pour obtenir une résine de polyuréthane dans laquelle a été introduit, dans son squelette moléculaire, un stabilisant de type amine encombrée,

dans lequel procédé le stabilisant de type amine encombrée doté de groupes imino est mis à réagir de telle sorte que la quantité de stabilisant contenue représente de 0,1 à 5,0 % du poids des matières solides contenues dans la composition aqueuse de résine de polyuréthane, et dans lequel procédé le stabilisant de type amine encombrée doté de groupes imino est du poly[{6-(1,1,3,3-tétraméthyl-butyl)amino-1,3,5-triazine-2,4-diyl}-{(2,2,6,6-tétraméthyl-pipéridin-4-yl)-imino}-hexarnéthylène-{(2,2,6,6-tétraméthyl-pipéridin-4-yl)-imino}] ou de la N,N,N,N-térrakis-[4,6-bis-(butyl-(N-méthyl-2,2,6,6-tétraméthyl-pipéridine-4-yl)amino)triazine-2-yl]-4,7-diaza-décane-1,10-diamine.

**3.** Feuille de simili-cuir obtenue par imprégnation d'un matériau de base de type tissu avec une composition aqueuse thermorésistante de résine de polyuréthane, conforme à la revendication 1.

**EP 1 595 903 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3166072 B
- JP 2000265052 A
- US 20030194556 A